# EUROPÄISCHE PATENTSCHRIFT

(11) **EP 3 459 771 B1**
(45) Veröffentlichungstag und Bekanntmachung des Hinweises auf die Patenterteilung: **04.11.2020**
(21) Anmeldenummer: 18195796.0
(22) Anmeldetag: 20.09.2018
(51) Int. Cl.: B60J 10/00, B60J 10/35

(54) **ANDRUCKLEISTE ZUM HALTEN UND ANDRÜCKEN EINES DICHTUNGSPROFILS**
PRESSURE BAR FOR HOLDING AND PRESSING A SEAL PROFILE
BAGUETTES D'APPUI POUR TENIR ET APPUYER UN PROFIL D'ÉTANCHÉITÉ

(30) Priorität: 25.09.2017 DE 202017105787 U
(43) Veröffentlichungstag der Anmeldung: 27.03.2019
(73) Patentinhaber: ThyssenKrupp System Engineering GmbH, 74076 Heilbronn (DE); thyssenkrupp AG, 45143 Essen (DE)
(72) Erfinder: Haupenthal, Horst-Günter, 54411 Hermeskeil RP Rheinland-Pfalz (DE); Weber, Thomas, 66687 Wadern/Bardenbach (DE)
(74) Vertreter: thyssenkrupp Intellectual Property GmbH

(56) Entgegenhaltungen:
- EP-A1- 2 913 211
- WO-A1-02/076778
- DE-A1- 19 652 459
- DE-A1-102010 018 298
- DE-A1-102010 050 410

## Beschreibung

Die Erfindung betrifft eine Andruckleiste zum Halten und Andrücken eines Dichtungsprofils, insbesondere einer Hohlprofildichtung, über eine Applikationsanlage für Karosseriebauteile.

Im Stand der Technik ist ein Verfahren zum Anbringen eines Dichtungsprofils auf einem Karosseriebauteil bekannt, bei dem bereits vorkonfektionierte beziehungsweise abgelängte Dichtungsprofile in einem Magazin bevorratet werden und auf das Karosseriebauteil, bei dem es sich beispielsweise um einen Türzusammenbau handeln kann, appliziert werden. Hierbei kommt eine sogenannte Applikationsanlage zum Einsatz, die komplementär zu einer Fläche des Karosseriebauteils, auf der das Dichtungsprofil appliziert werden soll, ausgebildet ist. Die Applikationsanlage umfasst eine Vielzahl von umfänglich angeordneten und benachbarten Andruckelementen, die nach einer Vorpositionierung der mit dem Dichtungsprofil bestückten Applikationsanlage unmittelbar vor dem Karosseriebauteil über eine geeignete Stellaktorik an das Karosseriebauteil zugestellt werden können, um das Dichtungsprofil auf der Fläche des Karosseriebauteil zu applizieren. Hierbei kommt eine sogenannte Klebetechnik zum Einsatz, bei der auf dem Dichtungsprofil bereits ein Klebestoff beziehungsweise Klebemittel in Längsrichtung aufgebracht ist. Dieses Klebemittel ist mit einem Schutz in Form eines Liners abgedeckt, so dass dieser Liner während des Applikationsprozesses des Dichtungsprofils auf das Karosseriebauteil durch die Applikationsanlage abgezogen werden muss. Bei der Stellaktorik kann es sich beispielsweise um hydraulisch oder pneumatische betätigte Kolben-Zylinder-Anordnungen handeln. In der EP 0 849 106 B1 ist eine Andruckelement einer Applikationsanlage beschrieben, bei dem das Dichtungselement zunächst über eine Halteleiste gehalten wird und anschließend, nachdem das Dichtungsprofil über die Applikationseinheit an das Karosseriebauteil vorpositioniert wurde, über eine Andrückeinrichtung an das Karosseriebauteil angedrückt wird, so dass sich der Klebestreifen an die Fläche des Karosseriebauteils anlegt und verklebt. Der insgesamt sehr bauraumbeanspruchenden Ausgestaltung der Aufnahme des Dichtungsprofils über die gerade ausgebildeten Halteleisten sind dann Grenzen gesetzt, wenn sich der Blechbereich des Karosseriebauteils in dem Bereich der Applikationsfläche einwölbt, so dass sich die Einschubrichtung der Haltleisten in einen Dichtungsschlitz des Dichtungsprofils und die benachbarte Kontur des Blechteils hinterschneiden, also ein Hinterschnitt vorliegt. Weiterhin erfordert die Andrückeinrichtung der EP 0 849 106 B1 einen verhältnismäßig großen Zustellweg, da zunächst das Schlauchteil des Dichtungsprofils komprimiert werden muss, bevor eine Andrückkraft auf den Dichtungsfuß aufgebracht wird, auf dessen Außenseite der Klebestreifen aufgebracht ist. Dokument DE 10 2010 050 410 zeigt eine gattungsgemäße Andrückleiste. Die Dokumente DE 196 52 459 und EP 2 913 211 zeigen weitere Stand der Technik Andrückleisten.

Ausgehend hiervon besteht die Aufgabe der vorliegenden Erfindung darin, eine Andrückleiste für eine Applikationsanlage bereitzustellen, die sowohl die Funktion des Haltens des Dichtungsprofils in der vorpositionierten Stellung vor dem Karosseriebauteil als auch die Funktion des Andrückens des Dichtungsprofils an das Karosseriebauteil vereint.

Die Aufgabe wird gelöst durch eine Andrückleiste zum Halten und Andrücken eines Dichtungsprofils, insbesondere einer Hohlprofildichtung, über eine Applikationsanlage für Karosseriebauteile, umfassend eine Haltelasche zum Halten des Dichtungsprofils und einen Andrücksteg, wobei die Haltelasche und der Andrücksteg einstückig ausgebildet sind und die Haltelasche über den Andrücksteg gegen eine mit dem Dichtungsprofil zu applizierende Fläche des Karosseriebauteils mit einer Andrückkraft beaufschlagbar ist. Die erfindungsgemäße Andrückleiste ermöglicht die Verwendung eines Stellaktuators mit einem kürzeren Stellweg, da nun nicht mehr ein Leerweg infolge des Zusammendrückens des Schlauchteils überwunden werden muss. Bei Verwendung eines Andrückzylinders, pneumatisch oder hydraulisch betätigt, kann dieser mit einem kürzeren Hub ausgeführt werden. Da die Andrückkraft nunmehr unmittelbar über die Haltelasche auf den Dichtungsfuß wirkt, muss keine Energie mehr für das Zusammendrücken des Schlauchteils aufwendet werden. Die Energieeinsparung kann beispielsweise in einem deutlich niedrigeren Druckluftverbrauch bestehen. Insgesamt werden eine größere Positioniergenauigkeit und eine bessere Andruckverteilung des Dichtungsprofils auf dem Karosseriebauteil erzielt, da der Anpressdruck unmittelbarer auf den Dichtungsfuß übertragen wird.

Eine vorteilhafte Ausgestaltung der Erfindung sieht vor, dass die Haltelasche und der Andrucksteg im Wesentlichen rechtwinklig zueinander angeordnet sind. Hierdurch ergibt sich eine besonders kompakte Gestalt der Andrückleiste, da die Breite der Andrückleiste annähernd der Breite des Dichtungsprofils entspricht. Hierdurch ist es möglich das Dichtungsprofil in Bereich eines Hinterschnitts der Haltelasche mit dem benachbarten Blechbereich des Karosseriebauteils zu applizieren.

Eine vorteilhafte Ausgestaltung der Erfindung sieht vor, dass auf einer der zu applizierenden Fläche des Karosseriebauteils abgewandten Stirnfläche der Haltelasche eine quer zu einer Wirkrichtung der Andrücckraft verlaufende Haltenut angeordnet ist, zum formschlüssigen Eingriff eines Umfangsbereich des Schlauchteils des Dichtungsprofils in die Haltenut. Hierdurch sind ein sicheres Aufstecken und ein sicherer Halt des Dichtungsprofils auf der Halteleiste gewährleistet.

Eine vorteilhafte Ausgestaltung der Erfindung sieht vor, dass die Haltelasche und der Andrucksteg einen quer zu einer Wirkrichtung der Andruckkraft verlaufenden Aufnahmekanal ausbilden, zur Aufnahme zumindest eines Teils des Schlauchteils der Hohlprofildichtung. Hierdurch kann eine weitere Verbesserung des Halts des Dichtungsprofils auf der Haltleiste erreicht werden, beispielsweise wenn das Dichtungsprofil unter einem Radius gehalten und appliziert werden muss, um zu vermeiden, dass sich das Dichtungsprofil infolge der Eigenspannung von der Halteleiste löst.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figur 1: eine schematische Darstellung eines unteren Bereichs eines Karosseriebauteil mit einem Dichtungsprofil;
- Figur 2: eine schematische Darstellung eines unteren Bereichs eines Karosseriebauteil mit einem Dichtungsprofil und einer erfindungsgemäßen Andrückleiste in einer ersten Ausführungsform und
- Figur 3: eine erfindungsgemäße Andrückleiste in einer weiteren erfindungsgemäßen Ausführungsform mit einem Dichtungsprofil.

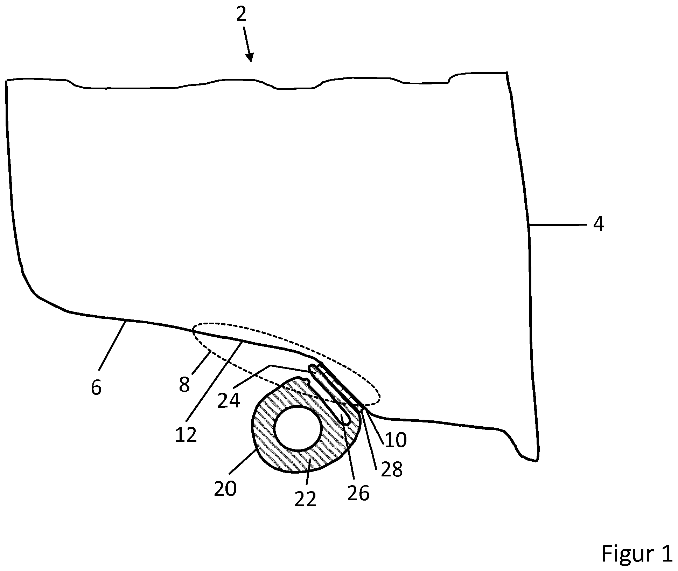

Die Figur 1 zeigt in schematischer Darstellung einen Querschnitt durch einen unteren Bereich eines Karosseriebauteils 2 in Form einer Tür eines Fahrzeugs, wobei mit dem Bezugszeichen 4 die Türaußenhaut und mit dem Bezugszeichen 6 der Türboden bezeichnet ist. Das Blech des Türbodens 6 hat einen üblichen Verlauf mit mehreren Biegungen beziehungsweise Wölbungen. Mit dem Bezugszeichen 8 ist ein Bereich markiert, in dem sich eine mit einem Dichtungsprofil 20 zu applizierende Fläche 10 des Karosseriebauteils 2 mit einer benachbarten, hierzu abgewinkelten Fläche 12 hinterschneidet. Bei dem Dichtungsprofil 20 handelt es sich bevorzugt um eine Hohlprofildichtung mit einem Schlauchteil 22, einem Dichtungsfuß 24 und einem Dichtungsschlitz 26 zwischen dem Schlauchteil 22 und dem Dichtungsfuß 24. Der Dichtungsschlitz 26 öffnet sich in Richtung der Fläche 12, so dass auch zwischen dem Dichtungsschlitz 26 und der Fläche 12 ein Hinterschnitt vorliegt. Das Dichtungsprofil ist über einen Klebestreifen 28 an der Fläche 10 gehalten. Über das Dichtungsprofil 20 kann die Karosseriebauteil 2 im geschlossenen Zustand beispielsweise gegen einen Seitenschwellerbereich des Fahrzeugs gedichtet sein.

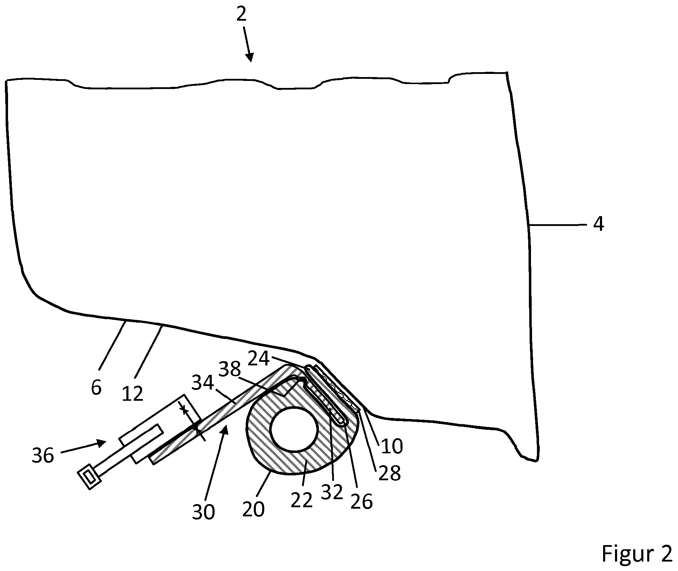

Die Figur 2 zeigt eine Situation, in der das Dichtungsprofil 20 von einer erfindungsgemäßen Andrückleiste 30 gehalten ist, bevor das Dichtungsprofil 20 an dem Karosseriebauteil 2 appliziert wird. Hierbei ist das Dichtungsprofil 20 beziehungsweise der Klebestreifen 28 beabstandet zu der Fläche 10 des Karosseriebauteils 2 gehalten. Die Andrückleiste 30 ist in der Figur 2 in einer ersten Ausführungsform gezeigt, die im Querschnitt L-förmig geformt ist. Die Andrückleiste 30 umfasst eine Haltelasche 32 und einen hierzu im Wesentlichen rechtwinklig angeordneten Andrücksteg 34. Die Haltelasche 32 und der Andrücksteg 34 sind einstückig ausgebildet, wobei beide entweder aus einem Werkstück gefertigt sind oder aus zumindest zwei Bauteilen lösbar zusammengesetzt sind. Die Haltelasche 32 ist dazu ausgebildet, in den Dichtungsschlitz 26 einzugreifen, um hierüber das Dichtungsprofil 20 zu halten, insbesondere in der dargestellten Position zu halten, um ausgehend hiervon das Dichtungsprofil 20 auf der Fläche 10 des Karosseriebauteils 2 über den Klebestreifen 28 zu applizieren. Der Andrücksteg 34 ist vorliegend mit einem Stellaktuator 36 verbunden, der hydraulisch oder pneumatisch betätigt sein kann. Der Stellaktuator 36 wiederum kann an einem Grundelement der insgesamt nicht gezeigten Applikationsanlage befestigt sein. In Längsrichtung des Dichtungsprofils 20 sind eine Mehrzahl an Stellaktuatoren 36 und jeweilige Andrückleisten 30 angeordnet, so dass das Dichtungsprofil 20 vollumfänglich die in Figur 2 gezeigte Lage bezüglich des Karosseriebauteils 2 haben kann. In diese relative Lage wiederum wird das Dichtungsprofil über das Grundelement, beispielsweise über die Handhabung durch einen Industrieroboter, gebracht. Ausgehend von dieser relativen Lage kann das Dichtungsprofil 20 abschnittsweise über den jeweiligen Stellaktuator 36 auf das Karosseriebauteil 2 zur Applikation zugestellt werden. Über die erfindungsgemäße Andrückleiste 30 kann nun unmittelbar eine Andrückkraft auf den Dichtungsfuß 24 aufgebracht werden, an dessen Außenseite der Klebestreifen 28 bereits angebracht ist. Die erfindungsgemäße Andrückleiste 30 ist aber insbesondere dann von Vorteil, wenn das Dichtungsprofil in dem Bereich eines Hinterschnitts des Karosseriebauteils 2 appliziert werden soll. Durch die bevorzugt L-förmige Gestaltung der Andrückleiste 30 erhöht sich die Breite des Dichtungsprofils 20, während es auf die Haltelasche 32 aufgesteckt ist, lediglich um das Maß der Dicke des Andrückstegs 34, also unwesentlich. Um einen festen Sitz des Dichtungsprofils 20 auf der Haltelasche 32 zu gewährleisten, kann an der Haltelasche 32 eine Haltenut 38 vorgesehen sein, in die Material des Dichtungsprofils 20 formschlüssig eingreifen kann.

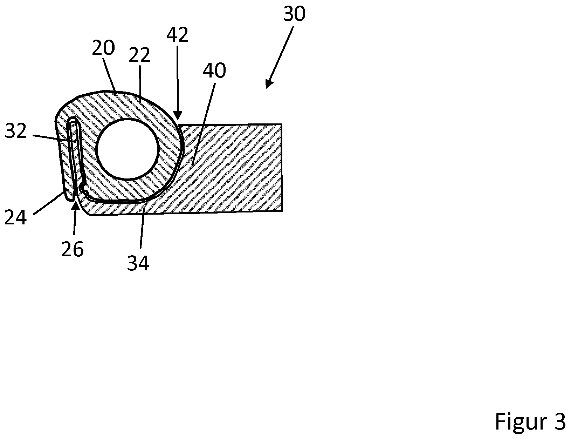

Die Figur 3 zeigt eine weitere Ausführungsform einer erfindungsgemäßen Andrückleiste 30, bei der der Andrücksteg 34 derart ausgestaltet ist, dass er einen Konturabschnitt 40 umfasst, der sich um das Schlauchteil 22 des Dichtungsprofil 20 zumindest teilweise herumlegt, wenn das Dichtungsprofil 20 auf die Andrückleiste 30 gesteckt ist. Der Konturabschnitt 40 umschließt zusammen mit der Haltelasche 32 den überwiegenden Teil des Schlauchteils 22, so dass Konturabschnitt 40 und Haltelasche 32 einen Aufnahmekanal 42 bilden. Bei dieser Ausführungsform ist das Dichtungsprofil 20 somit zweifach von der Andrückleiste 30 gehalten, nämlich einmal über die in den Dichtungsschlitz 26 gesteckte Haltelasche 32 und außerdem über den zwischen Haltelasche 32 und Konturabschnitt 40 einsitzenden Schlauchteil 22.

### Bezugszeichenliste

- 2: Karosseriebauteil
- 4: Türaußenhaut
- 6: Türboden
- 8: Hinterschnitt
- 10: Fläche
- 12: Fläche
- 20: Dichtungsprofil
- 22: Schlauchteil
- 24: Dichtungsfuß
- 26: Dichtungsschlitz
- 28: Klebestreifen
- 30: Andrückleiste
- 32: Haltelasche
- 34: Andrücksteg
- 36: Stellaktuator
- 38: Haltenut
- 40: Konturabschnitt
- 42: Aufnahmekanal

## Patentansprüche

1. Andrückleiste (30) zum Halten und Andrücken eines Dichtungsprofils (20), insbesondere einer Hohlprofildichtung, über eine Applikationsanlage für Karosseriebauteile (2), umfassend eine Haltelasche (32) zum Halten des Dichtungsprofils (20) und einen Andrücksteg (34), **gekennzeichnet dadurch dass** die Haltelasche (32) und der Andrücksteg (34) einstückig ausgebildet und im Wesentlichen rechtwinklig zueinander angeordnet sind und die Haltelasche (32) über den Andrücksteg (34) gegen eine mit dem Dichtungsprofil (20) zu applizierende Fläche(10) des Karosseriebauteils (2) mit einer Andrückkraft beaufschlagbar ist.

2. Andrückleiste (30) nach Anspruch 1 , **dadurch gekennzeichnet, dass** auf einer der zu applizierenden Fläche des Karosseriebauteils (2) abgewandten Stirnfläche der Haltelasche (32) eine quer zu einer Wirkrichtung der Andrückkraft verlaufende Haltenut (38) angeordnet ist, zum formschlüssigen Eingriff eines Umfangsbereich des Schlauchteils (22) des Dichtungsprofils (2) in die Haltenut (38).

3. Andrückleiste (30) nach einem der Ansprüche 1 oder 2, **dadurch gekennzeichnet, dass** die Haltelasche (32) und der Andrücksteg (34) einen quer zu einer Wirkrichtung der Andrückkraft verlaufenden Aufnahmekanal (42) ausbilden, zur Aufnahme zumindest eines Teils des Schlauchteils (22) der Hohlprofildichtung (20)

## Claims

1. Pressure-exerting bar (30) for retaining, and exerting pressure on, a sealing profile (20), in particular a hollow-profile seal, via an application installation for vehicle-body components (2), comprising a retaining lug (32) for retaining the sealing profile (20) and a pressure-inserting crosspiece (34), **characterized in that** the retaining lug (32) and the pressure-exerting crosspiece (34) are formed in one piece and are arranged essentially at right angles to one another, and the pressure-exerting crosspiece (34) can force the retaining lug (32), by way of a pressure-exerting force, against a surface (10) of the vehicle-body component (2) which is to be applied to the sealing profile (20).

2. Pressure-exerting bar (30) according to Claim 1, **characterized in that** a retaining groove (38) which runs transversely to a direction of action of the pressure-exerting force is arranged on an end surface of the retaining lug (32) which is directed away from that surface of the vehicle-body component (2) which is to be applied, the retaining groove being intended for the form-fitting engagement of the circumferential region of the tubular part (22) of the sealing profile (2) in the retaining groove (38).

3. Pressure-exerting bar (30) according to either of Claims 1 and 2, **characterized in that** the retaining lug (32) and the pressure-exerting crosspiece (34) form an accommodating channel (42) which runs transversely to a direction of action of the pressure-exerting force, the accommodating channel being intended for accommodating at least part of the tubular part (22) of the hollow-profile seal (20).

## Revendications

1. Baguette de pressage (30) pour retenir et presser un profil d'étanchéité (20), en particulier un joint d'étanchéité profilé creux, par le biais d'une installation d'application pour des composants de carrosserie (2), comprenant une patte de retenue (32) pour retenir le profil d'étanchéité (20) et une branche de pressage (34), **caractérisée en ce que** la patte de retenue (32) et la branche de pressage (34) sont réalisées d'une seule pièce et sont disposées essentiellement à angle droit l'une par rapport à l'autre et la patte de retenue (32) peut être sollicitée avec une force de pressage par le biais de la branche de pressage (34) contre une surface (10) du composant de carrosserie (2) devant être garnie avec le profil d'étanchéité (20).

2. Baguette de pressage (30) selon la revendication 1, **caractérisée en ce qu'**une rainure de retenue (38) s'étendant transversalement à une direction d'action de la force de pressage est disposée sur une surface frontale de la patte de retenue (32) opposée à la surface du composant de carrosserie (2) devant être garnie, de manière à mettre en prise par engagement par correspondance de formes une région périphérique de la partie tubulaire (22) du profil d'étanchéité (2) dans la rainure de retenue (38).

3. Baguette de pressage (30) selon l'une quelconque des revendications 1 et 2, **caractérisée en ce que** la patte de retenue (32) et la branche de pressage (34) constituent un canal de réception (42) s'étendant transversalement à une direction d'action de la force de pressage, afin de recevoir au moins une partie de la partie tubulaire (22) du joint d'étanchéité profilé creux (20).
